# EUROPEAN PATENT APPLICATION

(11) **EP 4 603 933 A1**
(43) Date of publication of application: **20.08.2025**
(21) Application number: 23954051.1
(22) Date of filing: 18.12.2023
(51) Int. Cl.: G05B 19/418

(54) **PRODUCT REMODELING METHOD AND SYSTEM ON PRODUCTION LINE**

(30) Priority: 27.09.2023 CN 202311255972
(71) Applicant: Contemporary Amperex Technology (Hong Kong) Limited, Hong Kong (HK)
(72) Inventor: WU, Kai, Ningde, Fujian 352100 (CN); LUO, Jian, Ningde, Fujian 352100 (CN); MA, Yuhang, Ningde, Fujian 352100 (CN); ZHAO, Jun, Ningde, Fujian 352100 (CN)
(74) Representative: Ran, Handong
(86) International application number: PCT/CN2023/139618
(87) International publication number: WO 2025/065919

(57) **Abstract**

A product changeover method and system for production line are provided by the present disclosure, wherein the product changeover method for production line includes: determining, in response to a product changeover instruction, size information of a product to be produced; determining correspondingly, based on the size information of the product to be produced, a target value of a control parameter for at least one flexible module in a production device; and sending the target value corresponding to the control parameter of the at least one flexible module to a controller of a corresponding flexible module so as to process an incoming material of the product to be produced.

## Description

### CROSS-REFERENCE TO RELATED APPLICATIONS

This disclosure claims priority to Chinese Patent Application No. 202311255972.0, filed on September 27, 2023 and entitled "PRODUCT CHANGEOVER METHOD AND SYSTEM FOR PRODUCTION LINE", which is incorporated herein by reference in its entirety.

### TECHNICAL FIELD

This disclosure relates to, but is not limited to, the field of automatic production technologies, and in particular, to a product changeover method and system for production line.

### BACKGROUND

The application of new energy batteries in life and industry is increasingly extensive. For example, new energy vehicles equipped with batteries have been widely used. In addition, batteries are also increasingly used in the field of energy storage and the like.

In the related art, when a cell module production line undergoes a changeover due to changes in types of products being produced, the line is usually stopped to modify device programs, re-teach a charge coupled device (Charge Coupled Device, CCD) template of an industrial camera, and recalibrate servo sites. The entire line changeover takes 24 hours or more, leading to low changeover efficiency and significant influence on productivity.

### SUMMARY

In view of this, embodiments of this disclosure provide at least a product changeover method and system for production line.

The technical solutions of the embodiments of this disclosure are implemented as follows.

According to one aspect, an embodiment of this disclosure provides a product changeover method for production line, where the production line includes at least one production device corresponding to a procedure of a product to be produced. The product changeover method for production line includes:
determining, in response to a product changeover instruction, size information of the product to be produced; determining correspondingly, based on the size information of the product to be produced, a target value of a control parameter for at least one flexible module in the production device; and sending the target value corresponding to the control parameter of the at least one flexible module to a controller of a corresponding flexible module so as to process an incoming material of the product to be produced.

According to another aspect, an embodiment of this disclosure provides a product changeover system for production line. The product changeover system for production line includes: a control device, configured to: determine, in response to a product changeover instruction, size information of a product to be produced; determine correspondingly, based on the size information of the product to be produced, a target value of a control parameter for at least one flexible module in a production device; and send the target value corresponding to the control parameter of the at least one flexible module to a controller of a corresponding flexible module; and the production device, configured to process an incoming material of the product to be produced.

In the embodiments of this disclosure, the size information of the product to be produced can be determined based on the product changeover instruction; then, based on the size information of the product to be produced, the target value of the control parameter is correspondingly determined for the at least one flexible module in the production device; and ultimately, the target value corresponding to the control parameter of the at least one flexible module is sent to the controller of the corresponding flexible module so as to process the incoming material of the product to be produced. Thus, the target value of the control parameter can be rapidly determined for the at least one flexible module in the production device based on the size information of the produced product, so that the controller of the flexible module controls the flexible module based on the target value of the control parameter to process the incoming material of the product to be produced. Thus, the target value of the control parameter of the production device on the production line is determined based on the size information of the produced product, so that the changeover efficiency of the production line can be improved.

It should be understood that the foregoing general description and the following detailed description are only illustrative and interpretative and are not intended to limit the technical solutions of this disclosure.

### BRIEF DESCRIPTION OF DRAWINGS

The accompanying drawings herein are incorporated into this specification and form a part of this specification. The accompanying drawings illustrate embodiments conforming to this disclosure and are intended to describe the technical solutions of this disclosure together with this specification.
FIG. 1 is a first schematic flowchart of implementation of a product changeover method for production line according to an embodiment of this disclosure;
FIG. 2 is a second schematic flowchart of implementation of a product changeover method for production line according to an embodiment of this disclosure;
FIG. 3 is a third schematic flowchart of implementation of a product changeover method for production line according to an embodiment of this disclosure;
FIG. 4 is a schematic diagram of a device structure of a layer height detection device according to an embodiment of this disclosure;
FIG. 5 is a schematic diagram of a device structure of a loading robot according to an embodiment of this disclosure;
FIG. 6 is a schematic diagram of a device structure of a loading transfer platform according to an embodiment of this disclosure;
FIG. 7 is a schematic diagram of a device structure of a picking robot according to an embodiment of this disclosure;
FIG. 8 is a fourth schematic flowchart of implementation of a product changeover method for production line according to an embodiment of this disclosure;
FIG. 9 is a schematic diagram of a device structure of an adhesive film correction mechanism according to an embodiment of this disclosure;
FIG. 10 is a schematic diagram of a device structure of a pack robot according to an embodiment of this disclosure;
FIG. 11 is a schematic diagram of a device structure of a small unit pack platform according to an embodiment of this disclosure;
FIG. 12 is a schematic diagram of a device structure of a pre-stacking platform according to an embodiment of this disclosure;
FIG. 13 is a first schematic diagram of a device structure of a stacking and shaping mechanism according to an embodiment of this disclosure;
FIG. 14 is a second schematic diagram of a device structure of a stacking and shaping mechanism according to an embodiment of this disclosure;
FIG. 15 is a schematic diagram of a device structure of a pressing device according to an embodiment of this disclosure;
FIG. 16 is a schematic diagram of a device structure of a module code scanning device according to an embodiment of this disclosure;
FIG. 17 is a fifth schematic flowchart of implementation of a product changeover method for production line according to an embodiment of this disclosure; and
FIG. 18 is a schematic diagram of a constitution structure of a product changeover system for production line according to an embodiment of this disclosure.

### DESCRIPTION OF EMBODIMENTS

To make the objectives, technical solutions, and advantages of this disclosure clearer, the following further describes in detail the technical solutions of this disclosure with reference to the accompanying drawings and embodiments. The embodiments described should not be considered as limitations on this disclosure. All other embodiments obtained by persons of ordinary skill in the art without creative efforts shall fall within the protection scope of this disclosure.

In the following description, reference made to "some embodiments," describes a subset of all possible embodiments, but it can be understood that "some embodiments" may be the same subset or different subsets of all possible embodiments, and may be combined with each other without conflict.

The terms "first/second/third" involved are merely intended to distinguish similar objects and do not represent a specific order for objects. It can be understood that "first/second/third" can be interchanged in a specific order or sequence when permitted, so that the embodiments described herein can be implemented in an order other than that illustrated or described herein.

Unless otherwise defined, all technical and scientific terms used herein shall have the same meanings as commonly understood by persons skilled in the technical field to which this disclosure belongs. The terms used herein are merely intended to describe this disclosure rather than to limit this disclosure.

Currently, the application of new energy batteries in life and industry is increasingly extensive. New energy batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, and aerospace. With the continuous expansion of application fields of traction batteries, market demands for traction batteries are also increasing.

In an embodiment of this disclosure, a battery may be a battery cell. The battery cell refers to a basic unit that can realize mutual conversion between chemical energy and electrical energy and can be used for assembling a battery module or battery pack to supply power to an electric apparatus. The battery cell may be a secondary battery. The secondary battery refers to a battery cell whose active material can be activated for continuous use through charging after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead storage battery, or the like. This is not limited in this embodiment of this disclosure.

A battery cell typically includes an electrode assembly. The electrode assembly includes a positive electrode, a negative electrode, and a separator. During charging and discharging of the battery cell, active ions (for example, lithium ions) intercalate and deintercalate back and forth between the positive electrode and the negative electrode. The separator is disposed between the positive electrode and the negative electrode to prevent short circuits between the positive and negative electrodes and allow active ions to pass through.

In some embodiments, the battery cell further includes an electrolyte. The electrolyte conducts ions between the positive and negative electrodes. The electrolyte is not specifically limited to any specific type in this disclosure, and may be selected based on needs. The electrolyte may be in a liquid state, a gel state, or an all-solid-state.

In some embodiments, the battery cell may include an enclosure. The enclosure is configured to package components such as the electrode assembly and the electrolyte. The enclosure may be a steel enclosure, an aluminum enclosure, a plastic (such as polypropylene) enclosure, a composite metal enclosure (such as a copper-aluminum composite enclosure), an aluminum-plastic film, or the like.

For example, the battery cell may be a cylindrical battery cell, a prismatic battery cell, a pouch battery cell, or a battery cell of another shape. The prismatic battery cell includes a square battery cell, a blade battery cell, and a multi-prism battery, where the multi-prism battery is, for example, a six-prism battery. This is not particularly limited in this disclosure.

In some embodiments, the enclosure includes an end cover and a housing. The housing is provided with an opening, and the end cover closes the opening to form a closed space for accommodating substances such as the electrode assembly and the electrolyte. The housing may be provided with one or more openings. One or more end covers may also be provided.

In some embodiments, the enclosure is provided with at least one electrode terminal, and the electrode terminal is electrically connected to a tab. The electrode terminal may be directly connected to the tab or indirectly connected to the tab through an adapting component. The electrode terminal may be disposed on the end cover or on the housing.

In some embodiments, the enclosure is provided with a pressure relief mechanism. The pressure relief mechanism is configured to release internal pressure of the battery cell.

In an embodiment of this disclosure, the battery may alternatively be a single physical module that includes one or more battery cells for providing a higher voltage and capacity. When a plurality of battery cells are provided, the plurality of battery cells are connected in series, parallel, or series-parallel via a busbar.

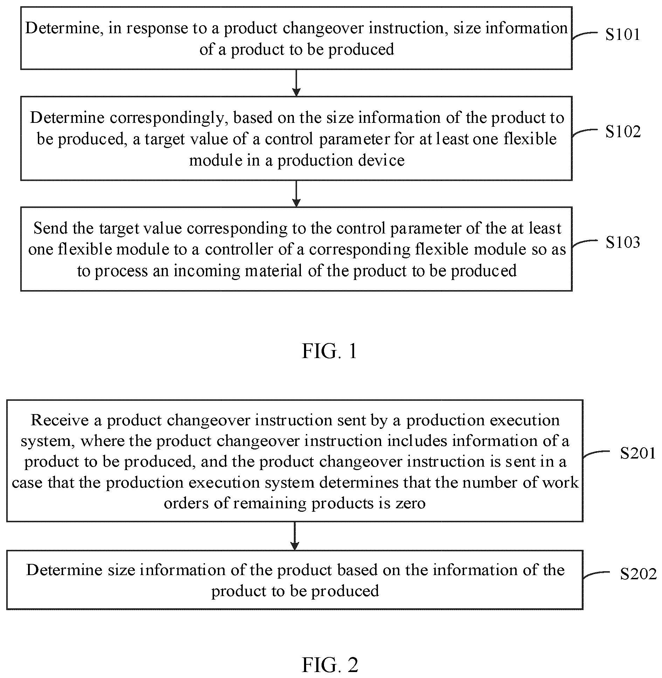

An embodiment of this disclosure provides a product changeover method for production line, where the production line includes at least one production device corresponding to a procedure of a product to be produced. As shown in FIG. 1, the method includes steps S101 to S103.

Step S101: Determine, in response to a product changeover instruction, size information of the product to be produced.

Here, the method can be executed by a control device, and the product changeover instruction is used to indicate changeover of the production device in the production line. The product to be produced is a product to be produced by the production line after the changeover, and the size information of the product to be produced can indicate the size of the product. For different products, control parameters of the production device in the production line are different, and the control parameters are associated with the size information of the product to be produced. Therefore, before the changeover of the production line, the size information of the product to be produced needs to be determined first. In some embodiments, the size information of the product to be produced may include at least one of the following: height information, width information, and thickness information.

In some embodiments, when the production device is a production device for the first production procedure on the production line, the product changeover instruction can be sent by a production execution system. The production execution system can determine whether to send the product changeover instruction based on the number of work orders of remaining products, where the product changeover instruction carries the size information of the product to be produced. After receiving the product changeover instruction, the control device can obtain the size information of the product to be produced by parsing the product changeover instruction.

In some embodiments, when the production device is a production device for a non-first production procedure on the production line, the product changeover instruction can be indicated by a production state of a flexible module of a production device for a previous procedure or a previous production action of the production procedure, and the size information of the product to be produced can be determined based on the production state. In other words, the size information of the product to be produced can be transmitted in production devices corresponding to different production states, so that different production devices can obtain the size information of the product to be produced.

Step S102: Determine correspondingly, based on the size information of the product to be produced, a target value of a control parameter for at least one flexible module in the production device.

Here, the flexible module is a module in the production device that can change its control parameter based on different types of products.

In this embodiment of this disclosure, the control device can correspondingly determine the target value of the control parameter for the flexible module based on the size information of the product to be produced corresponding to a function of the flexible module, where the size information of the product to be produced matches the function of the flexible module. For example, when the flexible module is configured to perform layer height detection on an incoming material of the product to be produced, the size information is the height information of the product to be produced, that is, based on the height information of the product to be produced, the target value of the control parameter is determined for the flexible module that is configured to perform layer height detection on the incoming material of the product to be produced. When the flexible module is configured to carry the incoming material of the product to be produced, the size information is the width information of the product to be produced, that is, based on the width information of the product to be produced, the target value of the control parameter is determined for the flexible module that is configured to carry the incoming material of the product to be produced.

In some embodiments, the control device can preset a control parameter set, where the control parameter set includes a first mapping relationship between size information of multiple products and target values of control parameters corresponding to the multiple products respectively. After obtaining the size information of the product to be produced, the control device can match the size information of the product to be produced with multiple first mapping relationships in the control parameter set, to correspondingly determine the target value of the control parameter for the at least one flexible module in the production device.

Step S103: Send the target value corresponding to the control parameter of the at least one flexible module to a controller of a corresponding flexible module so as to process the incoming material of the product to be produced.

Here, a processing method of the incoming material of the product to be produced may be processing or non-processing. In some embodiments, the non-processing may be detection or delivery.

In this embodiment of this disclosure, the target value of the control parameter can be sent to the controller of the flexible module, and the controller of the flexible module can control the flexible module based on the target value of the control parameter to process the incoming material of the product to be produced.

In this embodiment of this disclosure, the size information of the product to be produced can be determined based on the product changeover instruction; then, based on the size information of the product to be produced, the target value of the control parameter is correspondingly determined for the at least one flexible module in the production device; and ultimately, the target value corresponding to the control parameter of the at least one flexible module is sent to the controller of the corresponding flexible module so as to process the incoming material of the product to be produced. Thus, based on the size information of the produced product, the target value of the control parameter can be rapidly determined for the at least one flexible module in the production device, so that the controller of the flexible module controls the flexible module based on the target value of the control parameter to process the incoming material of the product to be produced. Thus, the target value of the control parameter of the production device on the production line is determined based on the size information of the produced product, so that the changeover efficiency of the production line can be improved.

In some embodiments, the flexible module includes at least one of the following: a driving module and a detection module. In a case that the flexible module includes a driving module, step S103 may include: The control device sends the target value of the control parameter to a controller of the driving module, where after the driving module reaches a target site, an execution mechanism or detection module connected to the driving module is enabled to process the incoming material of the product.

Here, the driving module may be a module that can provide force and motion and is configured to drive the execution mechanism or the detection module. The execution mechanism may be a mechanism for fixing the incoming material of the product to be produced. For example, the execution mechanism may be a clamping plate disposed on a gripper of a robot. The robot may be a robot in each production procedure. The detection module may be a module configured to detect the incoming material of the product to be produced. For example, the detection module may be a detection sensor configured to detect a layer height of the incoming material of the product to be produced.

In these embodiments of this disclosure, after the control device sends the target value of the control parameter to the controller of the driving module, the controller can control the driving module to reach the target site based on the target value of the control parameter, so that the execution mechanism or detection module connected to the driving module is enabled to process the incoming material of the product.

In some embodiments, in a case that the flexible module includes a detection module, a control parameter of the detection module includes a position parameter of a target object detected by the detection module. The foregoing step S103 may be implemented through step S131 and step S132.

Step S131: The control device sends a target value of the position parameter of the target object to a controller of the detection module.

Step S132: The detection module detects the target object based on the target value of the position parameter.

Here, the position parameter of the target object is used to characterize a target value given to the detection module according to the position parameter, to detect the target object. The target object may be a target that needs to be detected in the incoming material of the product to be produced.

In these embodiments of this disclosure, in a case that the flexible module is the detection module, the control device can send the target value of the position parameter of the target object to the controller of the detection module, and the controller can control the detection module to detect the target object based on the target value of the position parameter.

For example, when the incoming material of the product to be produced is a cell, the target object may be a cell code on the cell, and the detection module can scan the cell code on the cell according to the position parameter of the target object.

When the production device in step S101 is the production device for the first production procedure on the production line, as shown in FIG. 2, step S101 can be implemented through step S201 and step S202.

Step S201. Receive a product changeover instruction sent by the production execution system, where the product changeover instruction includes information of the product to be produced, and the product changeover instruction is sent in a case that the production execution system determines that the number of work orders of remaining products is zero.

Here, the first production procedure is the first procedure in the production line that processes the incoming material of the product to be produced. For example, in a case that the incoming material of the product to be produced is the cell, the first production procedure may be a loading procedure.

In this embodiment of this disclosure, before step S201, in a case that the production execution system determines that the number of work orders of remaining products is zero, a product changeover instruction is sent to a control device of the production device for the first production procedure, so that the control device receives the product changeover instruction sent by the production execution system. Here, the number of work orders of remaining products can indicate that the products produced currently on the production line have been completely produced, and a production process of a next product (that is, the product to be produced) needs to be performed, so a product changeover instruction is sent so that the production line undergoes a changeover.

In some embodiments, the production execution system can determine whether the number of work orders of remaining products is zero based on the number of qualified products produced currently, the number of unqualified products produced currently, and the number of required products. In a case that the number of qualified products produced currently is greater than or equal to the sum of the number of unqualified products produced currently and the number of required products, it is determined whether the number of work orders of remaining products is zero.

Step S202: Determine the size information of the product based on the information of the product to be produced.

Here, the information of the product to be produced is used to characterize a type of the product to be produced, and different types of products correspond to different size information. During implementation, there is a second mapping relationship between information of each product to be produced and corresponding size information. The control device can determine, based on the second mapping relationship, the size information of the product corresponding to the information of the product to be produced.

In this embodiment of this disclosure, in a case that the production device is the production device corresponding to the first production procedure, the size information of the product can be determined by receiving the product changeover instruction that is sent by the production execution system and includes the product information of the product, so that the efficiency of determining the size information of the product can be improved.

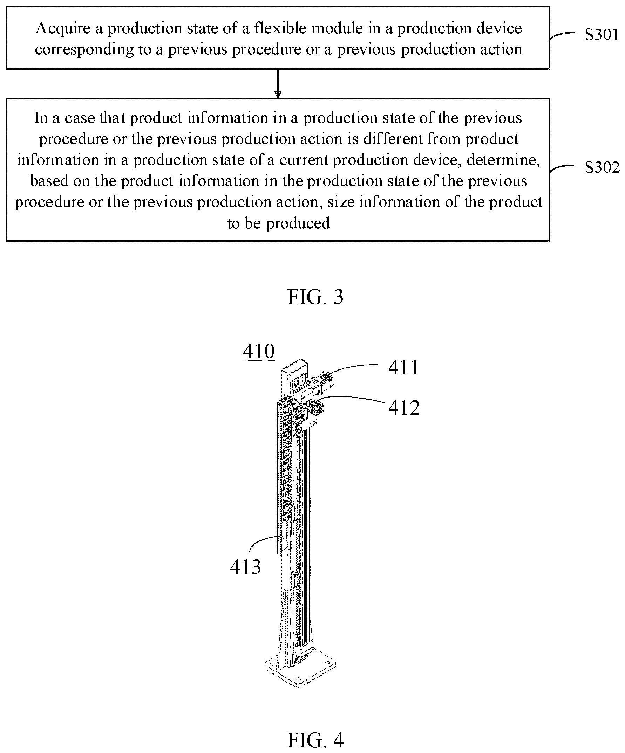

When the production device in step S101 is the production device for the non-first production procedure on the production line, as shown in FIG. 3, step S101 can be implemented through step S301 and step S302.

Step S301: Acquire a production state of a flexible module in a production device corresponding to a previous procedure or a previous production action.

Here, the previous procedure is a preceding procedure in procedures adjacent in production time. For example, a production process of a product a is as follows: A procedure a is performed first, and a procedure b is then performed, so the procedure a is a previous procedure of the procedure b. The previous production action refers to a preceding production action in production actions adjacent in production time in the non-first production procedure. For example, the procedure a includes a preceding production action 1 and a following production action 2, so the production action 1 is a previous production action of the production action 2.

Here, the production state of the flexible module in the production device can characterize information of a product produced currently by the production device. In other words, when the production line undergoes a changeover, the production state of the flexible module in the production device needs to be updated while the production device for the production procedure processes the product to be produced. Thus, a production device of a next procedure can obtain product information from a production state of a flexible module in a production device corresponding to a previous procedure, so as to undergo a changeover.

Step S302: In a case that product information in the production state of the previous procedure or the previous production action is different from product information in a production state of a current production device, determine, based on the product information in the production state of the previous procedure or the previous production action, the size information of the product to be produced.

In this embodiment of this disclosure, after the control device acquires the production state of the flexible module in the production device corresponding to the previous procedure or the previous production action, it is necessary to determine whether the product information in the production state is the same as the product information in the production state of the current production device. In a case that it is determined that the product information in the production state is different from the product information in the production state of the current production device, the size information of the product to be produced is determined based on the product information in the production state of the previous procedure or the previous production action.

In some embodiments, the information of the product to be produced may be the same as the product information in the production state of the current production device. In this case, the size information of the product to be produced does not need to be determined again, and the size information of the product produced currently is used as the size information of the product to be produced.

In this embodiment of this disclosure, for the production device for the non-first production procedure, the size information of the product to be produced can be determined based on the production state of the flexible module in the production device corresponding to the previous procedure or the previous production action in this procedure. Thus, the accuracy of determining the size information of the product to be produced can be improved. This is because if the size information of the product to be produced is incorrect, the size information of the product to be produced can be corrected in a process of processing the incoming material of the product to be produced by the production device corresponding to the previous procedure or the previous production action in this procedure. Therefore, through the production verification of the production device corresponding to the previous procedure or the previous production action in this procedure, the accuracy of determining the size information of the product to be produced can be improved.

In some embodiments, the production line includes a loading device corresponding to the loading procedure, where the loading device includes a layer height detection device. A driving module of the layer height detection device includes a first servo driving module for driving a layer height detection sensor to move along a height direction. As shown in FIG. 4, the layer height detection device 410 includes a first servo driving module 411 disposed on a bracket 413 and a layer height detection sensor 412. The first servo driving module 411 is configured to drive the layer height detection sensor 412 to perform layer height detection on the incoming material of the product after the height information of the product descends to the target site.

Based on FIG. 4, the foregoing step S102 can be implemented through step S121 and step S122.

Step S121: The control device determines a layer height detection parameter value for the first servo driving module based on the height information of the product to be produced.

Step S122: The first servo driving module drives the layer height detection sensor to perform layer height detection on the incoming material of the product after the height information of the product descends to the target site.

In these embodiments of this disclosure, after obtaining the height information of the product to be produced, the control device can determine the target site based on a difference between current height information of the first servo driving module and the height information of the product to be produced, and then control the first servo driving module to drive the layer height detection sensor to descend to the target site so as to perform layer height detection on the incoming material of the product.

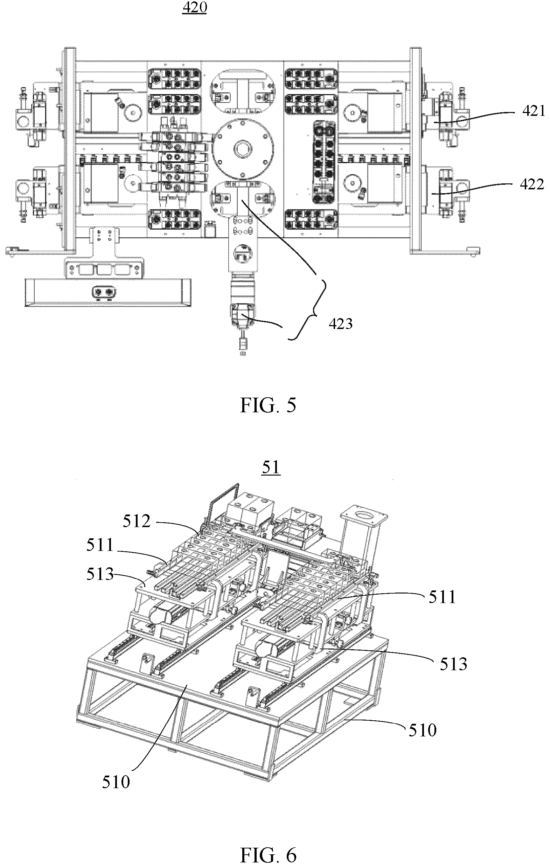

In some embodiments, the driving module of the loading device further includes a second servo driving module on a gripper of a loading robot. The loading robot may be a four-axis or six-axis robot. As shown in FIG. 5, the gripper 420 of the loading robot includes a first clamping plate 421, a second clamping plate 422, and a second servo driving module 423, where the second servo driving module 423 can adjust a distance between the first clamping plate 421 and the second clamping plate 422, so that a first clamping member (not shown) of the first clamping plate 421 and a second clamping member (not shown) of the second clamping plate 422 respectively abut against two opposite sides of a product in a width direction. Based on FIG. 5, the foregoing step S102 can be implemented through step S123 and step S124.

Step S123: The control device determines a loading location parameter value for the second servo driving module based on the width information of the product to be produced.

Step S124: The second servo driving module drives the two clamping plates on the gripper to move, so that the distance between the two clamping plates is adjusted to match the width information of the product.

Here, the two clamping plates on the gripper of the loading robot are the foregoing first clamping plate and second clamping plate.

In these embodiments of this disclosure, the loading location parameter value corresponds to the width information. The second servo driving module can drive the two clamping plates on the gripper to move based on the loading location parameter value, so that the distance between the two clamping plates is adjusted to match the width information of the product. Thus, the gripper of the loading robot can grasp the incoming material of the product to be produced.

In some embodiments, the loading device further includes a loading transfer platform, and the loading robot is configured to grasp the incoming material of the product to be produced onto the loading transfer platform.

In some embodiments, the foregoing method may further include step S125.

Step S125: The control device updates a production state of the gripper of the loading robot to the product information of the product.

In these embodiments of this disclosure, when or after the loading location parameter value is determined for the second servo driving module on the gripper based on the width information of the product to be produced, the production state of the gripper of the loading robot can be updated. Thus, the loading transfer platform for a next production action of the loading robot can obtain the product information of the product based on the production state of the gripper of the loading robot. Therefore, for the loading transfer platform, step S101 can be further implemented through step S111 and step S112.

Step S111: The control device acquires the production state of the gripper of the loading robot.

Step S112: In a case that product information in the production state of the gripper is different from product information in a production state of the loading transfer platform, the control device determines, based on the product information in the production state of the gripper, the size information of the product to be produced.

In these embodiments of this disclosure, the loading robot is a device corresponding to a previous production action of the loading transfer platform. Therefore, the production state of the gripper of the loading robot can be transmitted to the loading transfer platform. Thus, the information of the product to be produced does not need to be sent to the loading transfer platform by the production execution system, and the efficiency of determining the information of the product to be produced by the loading transfer platform can be improved.

In some embodiments, the driving module of the loading device further includes a fifth servo driving module on the loading transfer platform. FIG. 6 is a schematic diagram of a device structure of the loading transfer platform. As shown in FIG. 6, the loading transfer platform 51 includes a frame body 510, at least one support frame 513 disposed on the frame body 510 (two support frames 513 are shown in FIG. 6), a fifth servo driving module (not shown) disposed on each support frame, and an alignment clamping plate 511. The alignment clamping plate 511 is used for shaping and then stacking multiple cells 512 (that is, incoming materials of products to be produced). The fifth servo driving module is configured to drive two alignment clamping plates 511 on the loading transfer platform to move, so that a distance between the two alignment clamping plates 511 is adjusted to match the width information of the product. Based on FIG. 6, the foregoing step S102 can be implemented through step S126.

Step S126: The control device determines a loading alignment parameter value for the fifth servo driving module based on the width information of the product to be produced.

Here, the fifth servo driving module is configured to drive the two alignment clamping plates on the loading transfer platform to move, so that the distance between the two alignment clamping plates is adjusted to match the width information of the product. Thus, center lines respectively corresponding to incoming materials of multiple products are on a straight line, thereby achieving the alignment of the incoming materials of the multiple products.

In these embodiments of this disclosure, after the gripper of the loading robot grasps the incoming material of the product to be produced onto the loading transfer platform, the fifth servo driving module can drive the two alignment clamping plates on the loading transfer platform to move based on the loading alignment parameter value, thereby achieving the alignment of the incoming material of the product to be produced.

In some embodiments, the driving module of the loading device further includes a sixth servo driving module on the loading transfer platform, where the sixth servo driving module is configured to push the incoming material of the product along a thickness direction of the product to eliminate gaps between multiple incoming materials.

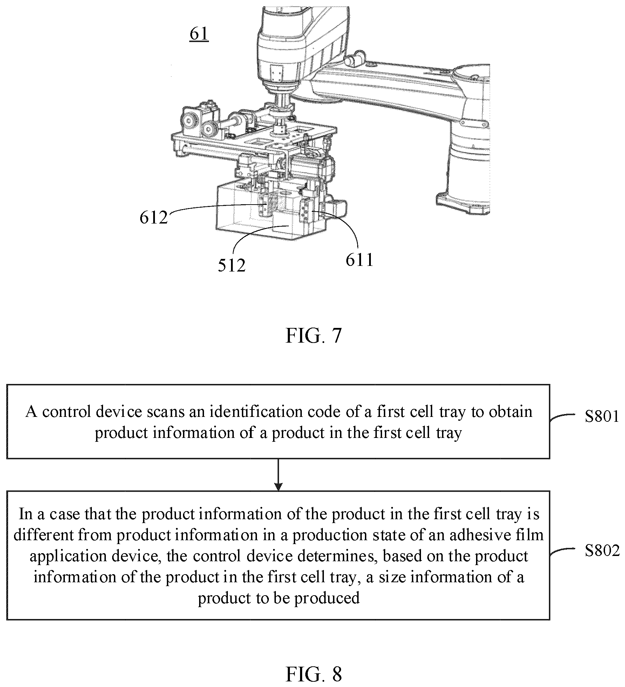

In some embodiments, the driving module of the loading device further includes a seventh servo driving module on a gripper of a picking robot. The picking robot may be a four-axis or six-axis robot. As shown in FIG. 7, the gripper 61 of the picking robot includes a third clamping plate 611, a fourth clamping plate 612, and a seventh servo driving module (not shown). The cell 512 is located between the third clamping plate 611 and the fourth clamping plate 612. The seventh servo driving module is configured to drive the third clamping plate 611 and the fourth clamping plate 612 on the gripper 61 of the picking robot to move, so that a distance between the third clamping plate 611 and the fourth clamping plate 612 on the gripper of the picking robot is adjusted to match the width information of the product. The foregoing step S102 can be implemented through step S127.

Step S127: The control device determines a picking location parameter value for the seventh servo driving module based on the width information of the product to be produced.

Here, the seventh servo driving module is configured to drive the two clamping plates on the gripper of the picking robot to move, so that the distance between the two clamping plates on the gripper of the picking robot is adjusted to match the width information of the product. The two clamping plates on the gripper of the picking robot are the third clamping plate and the fourth clamping plate.

In these embodiments of this disclosure, the picking location parameter value corresponds to the width information. The seventh servo driving module can drive the two clamping plates on the gripper of the picking robot to move based on the picking location parameter value, so that the distance between the two clamping plates on the gripper of the picking robot is adjusted to match the width information of the product. Thus, the gripper of the picking robot can grasp the incoming material of the product to be produced.

In some embodiments, when the picking location parameter value is determined for the seventh servo driving module, a production state of the picking robot can be updated to the product information of the product.

In some embodiments, in a case that the product to be produced is a module and the incoming material is a cell, the loading device further includes a first cell tray, and the picking robot is configured to grasp a cell of the module onto the first cell tray.

In some embodiments, after step S127, the method further includes step S128 and step S129.

Step S128: Acquire the production state of the picking robot.

Step S129: Write product information in the production state of the picking robot into an identification code of the first cell tray.

In these embodiments of this disclosure, the product information in the production state of the picking robot is written into the identification code of the first cell tray, so that the information of the product to be produced can be transmitted to the first cell tray. Thus, a device for a next production action of the first cell tray can acquire, based on the identification code of the first cell tray, the information of the product to be produced.

In some embodiments, the identification code of the first cell tray may be a radio frequency identification (Radio Frequency Identification, RFID) code.

In some embodiments, the detection module of the loading device further includes a first code scanning detection module. The target object is a cell code. The foregoing step S102 can be further implemented through step S130 and step S131.

Step S130: The control device determines, based on the size information of the product to be produced, a target value of a position parameter of the cell code for the first code scanning detection module.

Step S131: The first code scanning detection module scans, based on the target value of the position parameter of the cell code, the cell code on the incoming material of the product to be produced.

In these embodiments of this disclosure, positions of cell codes on different types of products are different, so the target value of the position parameter of the cell code needs to be determined based on the size information of the product to be produced. The target value of the position parameter of the cell code is used for characterizing the position information of the cell code on the incoming material of the product to be produced.

In these embodiments of this disclosure, the control device first obtains image information of the incoming material of the product to be produced via the first code scanning detection module; then, the control device determines position information of the cell code in the image information based on the target value of the position parameter of the cell code; and ultimately, the first code scanning detection module scans the cell code based on the position information of the cell code in the image information, and the control device writes content information of the cell code into the identification code of the first cell tray.

In some embodiments, a next procedure of the loading procedure includes an adhesive film application procedure. The production line includes an adhesive film application device corresponding to the adhesive film application procedure. As shown in FIG. 8, step S101 can be implemented through step S801 and step S802.

Step S801: The control device scans the identification code of the first cell tray to obtain product information of a product in the first cell tray.

Step S802: In a case that the product information of the product in the first cell tray is different from product information in a production state of the adhesive film application device, the control device determines, based on the product information of the product in the first cell tray, the size information of the product to be produced.

In these embodiments of this disclosure, a previous procedure of the adhesive film application procedure is the loading procedure, so the adhesive film application device corresponding to a procedure other than the non-first production procedure can determine, based on product information in a production state of the adhesive film application procedure, the size information of the product to be produced. In addition, the first cell tray is a device for a production action at the end of the loading procedure, so the size information of the product to be produced can be determined based on the product information of the product scanned from the identification code of the first cell tray.

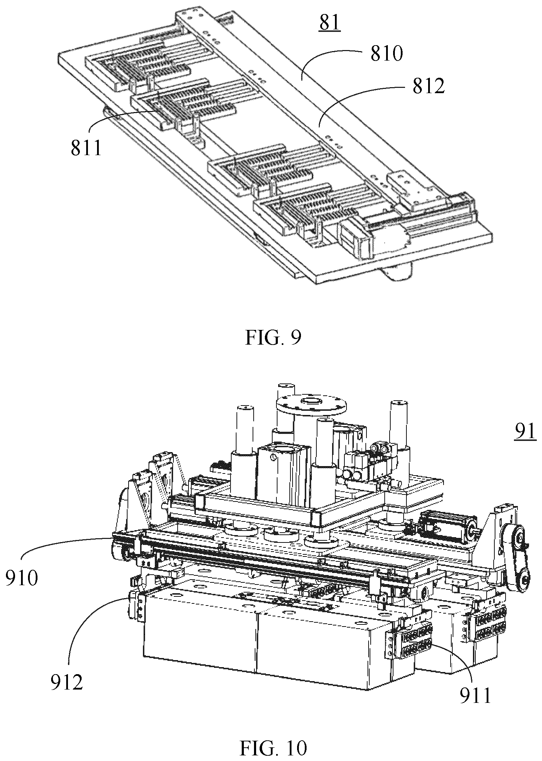

In some embodiments, a flexible module in the adhesive film application device includes a visual inspection module and a correction driving module, where the correction driving module may be a flexible module in an adhesive film correction mechanism of the adhesive film application device, and the correction driving module may include a first correction driving module and a second correction driving module. As shown in FIG. 9, the adhesive film correction mechanism 81 includes a substrate 810 as well as at least one first correction driving module 811 (four sets of first correction driving modules are shown in FIG. 9) and one second correction driving module 812 that are disposed on the substrate 810. The first correction driving module 811 is configured to adjust an accommodating space for placing adhesive films based on size information of the product. After some of the adhesive films are placed into the accommodating space of the first correction driving module 811, the second correction driving module 812 can push all the adhesive films into the accommodating space of the first correction driving module 811 at once, thereby achieving position correction of an adhesive film to be applied.

In these embodiments of this disclosure, step S102 can be implemented through step S803 and step S804.

Step S803: The control device determines, based on the size information of the product to be produced, a target value of an adhesive film location parameter for the correction driving module and a target value of an adhesive film position parameter for the visual inspection module.

Step S804: The correction driving module performs, based on the target value of the adhesive film location parameter, position correction on the adhesive film to be applied.

Here, the adhesive film location parameter is used for the position correction of the adhesive film.

In an actual application process, adhesive films are stored in storage bins, and the size of adhesive films in each storage bin corresponds to the size information of the product to be produced. Therefore, before the adhesive films are acquired, the product information of the product to be produced needs to be read first from the identification code of the first cell tray, and then the adhesive films are acquired from a storage bin corresponding to the product information of the product to be produced. Because positions of multiple adhesive films stored in the storage bin may be different, if an adhesive film is acquired from the storage bin and directly applied to a side of the incoming material of the product, adhesive film application positions corresponding to incoming materials of different products are different. Therefore, in these embodiments of this disclosure, the correction driving module can perform, based on the target value of the adhesive film location parameter corresponding to the size information of the product, position correction on the adhesive film to be applied.

In some embodiments, after the position correction of the adhesive film to be applied, the method further includes step S805 and step S806.

Step S805: The control device determines adhesive film application position information of the product based on product information of the product and controls an adhesive film application mechanism to apply the adhesive film to a side of the product.

Step S806: The visual inspection module inspects a position of the adhesive film on the product based on the target value of the adhesive film position parameter.

Here, the target value of the adhesive film position parameter is used for characterizing a theoretical position of the adhesive film on the product. In these embodiments of this disclosure, after the adhesive film application mechanism is controlled to apply the adhesive film to the side of the product based on the adhesive film position application information corresponding to the product information of the product, the visual inspection module can inspect the position of the adhesive film on the product based on the target value of the adhesive film position parameter to verify whether the actual position of the adhesive film matches the target value of the adhesive film position parameter.

In some embodiments, the side of the product may be a side with a small area in multiple sides of the product.

In some embodiments, the foregoing adhesive film application device includes at least one of the following: a small-side adhesive film application device and a large-side adhesive film application device. The adhesive film correction parameter includes at least one of the following: a small-side adhesive film correction parameter and a large-side adhesive film correction parameter. The adhesive film position parameter includes at least one of the following: a small-side adhesive film position parameter and a large-side adhesive film position parameter.

In some embodiments, an adhesive film application action of the large-side adhesive film application device can be performed after an adhesive film application action of the small-side adhesive film application device.

In some embodiments, the adhesive film application device further includes a pack robot. The pack robot may be a four-axis or six-axis robot. As shown in FIG. 10, a gripper 91 of the pack robot includes a gripper bracket 910 as well as a fifth clamping plate 911, a sixth clamping plate 912, and an eighth servo driving module (not shown) that are disposed on the gripper bracket 910, where the fifth clamping plate 911 and the sixth clamping plate 912 form a set. The eighth servo driving module drives the fifth clamping plate 911 and sixth clamping plate 912 on the gripper of the pack robot to move, so that a distance between the fifth clamping plate 911 and the sixth clamping plate 912 on the gripper 91 of the pack robot is adjusted to match the width information of the product, thereby allowing the product to be grasped in the width direction of the product. In these embodiments of this disclosure, the foregoing step S801 can be implemented through step S311.

Step S311: The control device scans the identification code of the first cell tray to obtain the product information of the product in the first cell tray.

Correspondingly, step S802 can be implemented through step S321.

Step S321: In a case that the product information of the product in the first cell tray is different from product information in a production state of the pack robot, determine, based on the product information of the product in the first cell tray, the size information of the product to be produced.

Correspondingly, the foregoing step S102 can be implemented through step S132 and step S133.

Step S132: Determine, based on the size information of the product to be produced, a target value of a control parameter for the eighth servo driving module on the gripper of the pack robot.

Step S133: The eighth servo driving module drives the two clamping plates on the gripper of the pack robot to move, so that the distance between the two clamping plates on the gripper of the pack robot is adjusted to match the width information of the product.

Here, the two clamping plates on the gripper of the pack robot are the foregoing fifth clamping plate and sixth clamping plate.

In some embodiments, the method may further include: The production state of the gripper of the pack robot is updated to the product information of the product.

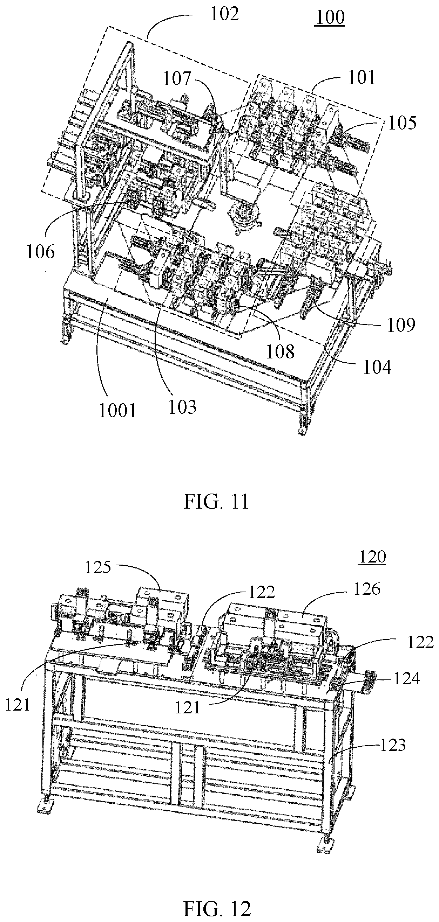

In some embodiments, the adhesive film application device further includes a small unit pack platform. As shown in FIG. 11, the small unit pack platform 100 includes a pack platform frame body 1001 as well as a loading mechanism 101 in a loading region, a pressing mechanism 102 in a pressing region, a first unloading mechanism 103 in a first unloading region, and a second unloading mechanism 104 in a second unloading region that are disposed on the pack platform frame body 1001. The loading mechanism 101 includes a first fixing mechanism 105. The pressing mechanism 102 includes a second fixing mechanism 106 and a pressing sub-mechanism 107. The first unloading mechanism 103 includes a third fixing mechanism 108. The second unloading mechanism 104 includes a fourth fixing mechanism 109.

The first fixing mechanism 105, the second fixing mechanism 106, the third fixing mechanism 108, and the fourth fixing mechanism 109 each include a ninth servo driving module (not shown) and a clamping jaw. The ninth servo driving module drives two clamping jaws on the fixing mechanism, so that a distance between the two clamping jaws matches thickness information of a product. The pressing sub-mechanism 107 includes a tenth servo driving module and a pressing plate, where the tenth servo driving module is configured to adjust a position of the pressing plate. The first fixing mechanism 105, the second fixing mechanism 106, the third fixing mechanism 108, and the fourth fixing mechanism 109 can rotate counterclockwise. For example, after rotating counterclockwise by 90°, the first fixing mechanism 105 is located on the pressing mechanism 102, the second fixing mechanism 106 is located on the first unloading mechanism 103, the third fixing mechanism 108 is located on the second unloading mechanism 104, and the fourth fixing mechanism 109 is located on the loading mechanism 101.

In these embodiments of this disclosure, step S301 can be implemented through step S312.

Step S312: Acquire the production state of the gripper of the pack robot.

Correspondingly, step S302 can be implemented through step S322.

Step S322: In a case that the product information in the production state of the gripper of the pack robot is different from product information in a production state of the fixing mechanism located in the unloading region, determine, based on the product information in the production state of the gripper of the pack robot, the size information of the product to be produced.

In these embodiments of this disclosure, the size information of the product to be produced may be thickness information. The fixing mechanism in the unloading region may be, for example, the third fixing mechanism and/or fourth fixing mechanism in FIG. 11.

Correspondingly, the foregoing step S102 can be implemented through step S134 and step S135.

Step S134: Determine, based on the thickness information of the product to be produced, a product fixing parameter value for the ninth servo driving module of the fixing mechanism located in the unloading region.

Step S135: The ninth servo driving module in the unloading region drives two clamping jaws on a corresponding fixing mechanism, so that a distance between the two clamping jaws matches the thickness information of the product.

In some embodiments, after the ninth servo driving module of the fixing mechanism located in the unloading region controls the clamping jaws to adjust the distance therebetween based on the product fixing parameter value, the fixing mechanism can be controlled to rotate to the loading region, and the pack robot can place the incoming material of the product between the two clamping jaws. Then, the fixing mechanism is controlled to rotate to the pressing region. Then, a pressing parameter value is determined for the tenth servo driving module based on the size information of the product to be produced that is obtained from a production state of the fixing mechanism. The tenth servo driving module is configured to adjust a position of the pressing plate on the pressing mechanism based on the pressing parameter value. After the pressing mechanism presses the product to be produced, the fixing mechanism located in the pressing region can be rotated to the unloading region.

In some embodiments, the adhesive film application device further includes an unloading robot. A target value of a control parameter is determined for an eleventh servo driving module on a gripper of the unloading robot based on the size information of the product to be produced that is obtained from the production state of the fixing mechanism located in the unloading region. The eleventh servo driving module is configured to drive two clamping plates on the gripper of the pack robot to move, so that a distance between the two clamping plates on the gripper of the unloading robot is adjusted to match the size information of the product, thereby allowing the incoming material of the product to be clamped from the unloading region.

In some embodiments, the adhesive film application device further includes a second cell tray. The foregoing unloading robot is configured to transfer a product from the unloading region to the second cell tray. In these embodiments of this disclosure, product information of the product to be produced, that is obtained from a production state of the unloading robot, can be written into an identification code of the second cell tray.

In some embodiments, the large-side adhesive film application device in the adhesive film application device can perform large-side adhesive film application on the product placed in the second cell tray. Here, the large-side adhesive film application is application of an adhesive film on a side with a large area of the product. For the large-side adhesive film application process, reference may be made to steps S803 to S806.

In some embodiments, a next procedure of the adhesive film application procedure includes a pre-stacking procedure. A pre-stacking device corresponding to the pre-stacking procedure includes a pre-stacking robot. During implementation, the pre-stacking robot may be a four-axis or six-axis robot. A gripper of the pre-stacking robot may include a twelfth servo driving module, a seventh clamping plate, and an eighth clamping plate. The twelfth servo driving module is configured to drive the seventh clamping plate and eighth clamping plate on the gripper of the pre-stacking robot to move, so that a distance between the seventh clamping plate and the eighth clamping plate is adjusted to match the height information of the product. In these embodiments of this disclosure, for a structure of the gripper of the pre-stacking robot, reference may be made to FIG. 10. The gripper of the pre-stacking robot differs from the gripper of the pack robot shown in FIG. 10 in that the gripper of the pack robot grasps a product in a width direction of the product, while the gripper of the pre-stacking robot grasps a product in a height direction of the product.

In some embodiments, a production state of the gripper of the pre-stacking robot can be updated based on the product information in the identification code of the second cell tray.

In some embodiments, the foregoing step S102 can be implemented through step S136 and step S137.

Step S136: The control device determines, based on the height information of the product to be produced, a target value of a control parameter for the twelfth servo driving module on the gripper of the pre-stacking robot.

Step S137: The twelfth servo driving module drives the two clamping plates on the gripper of the pre-stacking robot to move, so that the distance between the two clamping plates is adjusted to match the height information of the product.

Here, the two clamping plates on the gripper of the pre-stacking robot are the foregoing seventh clamping plate and eighth clamping plate.

In these embodiments of this disclosure, the pre-stacking device further includes a pre-stacking platform, and the pre-stacking robot is configured to grasp a product onto the pre-stacking platform. The pre-stacking platform is configured to press incoming materials of at least two products together. A pressing surface is a large-area side of the product with an adhesive film applied.

For a device structure of the pre-stacking platform, reference may be made to FIG. 12. The pre-stacking platform 120 includes a bracket body 123, a placement platform 124 disposed on the bracket body 123, and two sets of thirteenth servo driving modules 121 and two sets of fourteenth servo driving modules 122 located on the placement platform 124. The thirteenth servo driving module 121 is configured to adjust a position of a cell backing plate of the pre-stacking platform 120. The fourteenth servo driving module 122 is configured to adjust a position of a pre-stacking plate of the pre-stacking platform 120. In FIG. 12, a single-row module 125 is located on the left side. The single-row module 125 only needs to undergo the adhesive film application procedure once, that is, an adhesive film is applied to a large-area side of a cell. The thirteenth servo driving module 121 and fourteenth servo driving module 122 located on the left side are configured to press large-area sides of two cells of the single-row module 125 together. In FIG. 12, a double-row module 126 is located on the right side. The double-row module 126 needs to undergo the adhesive film application procedures twice, that is, adhesive films are applied to a large-area side and small-area side of a cell. The foregoing small unit pack platform is configured to press small-area sides of two cells together. The thirteenth servo driving module 121 and fourteenth servo driving module 122 located on the right side are configured to press large-area sides of four cells of the double-row module 126 together.

Based on FIG. 12, the foregoing step S102 can be implemented through steps S138 to S140.

Step S138: The control device determines a backing plate position parameter for the thirteenth servo driving module of the pre-stacking platform based on the width information of the product to be produced, and determines a stacking position parameter for the fourteenth servo driving module of the pre-stacking platform based on the thickness information of the product to be produced.

Step S139: The thirteenth servo driving module adjusts the position of the cell backing plate of the pre-stacking platform based on the backing plate position parameter.

In these embodiments of this disclosure, the thirteenth servo driving module adjusts the position of the cell backing plate of the pre-stacking platform based on the backing plate position parameter corresponding to the width information of the product, so that the incoming materials of the at least two products can be placed on the cell backing plate after the position adjustment.

Step S140: The fourteenth servo driving module adjusts the position of the pre-stacking plate of the pre-stacking platform based on the stacking position parameter.

In these embodiments of this disclosure, the fourteenth servo driving module adjusts the position of the pre-stacking plate of the pre-stacking platform based on the stacking position parameter corresponding to the thickness information of the product, and the pre-stacking plate after the position adjustment can press the incoming materials of the at least two products together.

In some embodiments, a next procedure of the pre-stacking procedure includes a stacking procedure. A stacking device corresponding to the stacking procedure includes a stacking robot. During implementation, the stacking robot may be a four-axis or six-axis robot. The stacking robot may include a fifteenth servo driving module and ninth clamping plates. The fifteenth servo driving module is configured to drive two ninth clamping plates on a gripper of the stacking robot to move, so that a distance between the two ninth clamping plates is adjusted to match the thickness information of the product. In these embodiments of this disclosure, for a structure of the gripper of the stacking robot, reference may be made to FIG. 10. The gripper of the stacking robot differs from the gripper of the pack robot shown in FIG. 10 in that the gripper of the pack robot grasps a product in a width direction of the product, while the gripper of the stacking robot grasps a product in a thickness direction of the product.

In some embodiments, a production state of the gripper of the stacking robot can be updated based on a production state of the pre-stacking platform.

In some embodiments, the foregoing step S102 can be implemented through step S141 and step S142.

Step S141: Determine, based on the thickness information of the product to be produced, a target value of a control parameter for the fifteenth servo driving module on the gripper of the stacking robot.

Step S142: The fifteenth servo driving module drives the two clamping plates on the gripper of the stacking robot to move, so that the distance between the two clamping plates is adjusted to match the thickness information of the product.

Here, the clamping plates on the gripper of the stacking robot are the foregoing ninth clamping plates.

In some embodiments, the stacking device further includes a stacking and shaping mechanism. The stacking robot is configured to grasp products pressed together onto a module tray in the stacking and shaping mechanism. The stacking and shaping mechanism is configured to stack the products on the module tray.

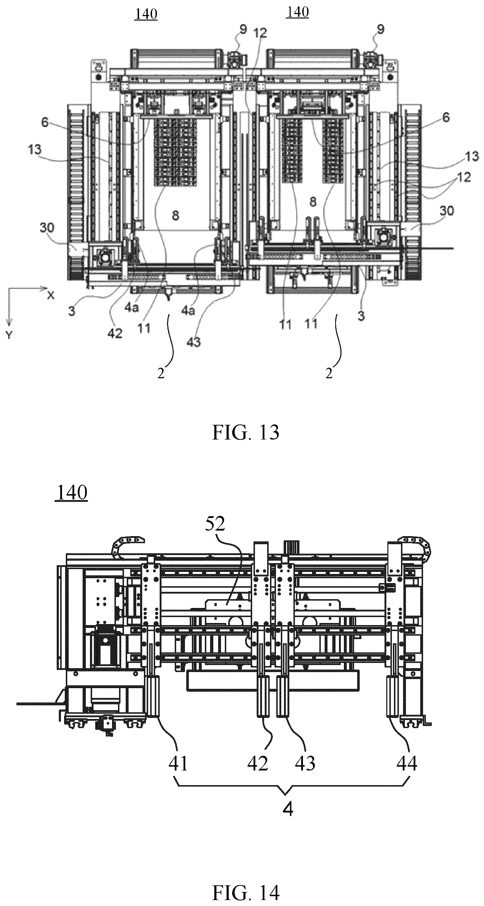

Referring to FIG. 13 and FIG. 14, a stacking apparatus 140 is configured to stack workpieces to form a neat workpiece queue 11, where the workpiece queue 11 includes multiple workpieces. The stacking apparatus 140 includes a base bracket (not shown in the figure), a stacking platform 2, and at least two shapers 4. The stacking platform 2 is used for bearing at least one workpiece. The stacking platform 2 is disposed on the base bracket. The at least two shapers 4 are disposed on the base bracket. The shapers 4 act in pairs to perform alignment operations to align workpieces located on the stacking platform 2. The paired shapers 4 are configured such that at least one of them acts to allow the paired shapers 4 to approach or move away from each other along a first direction above the stacking platform 2, and the alignment operation is performed by the actions of the shapers 4 approaching each other.

As shown in FIG. 13, a reference plate 6 is disposed on one end side of the base bracket in a second direction. The reference plate 6 is supported by a bracket (not shown in the figure) or the like, and the bracket (not shown in the figure) is fixed to the base bracket. The reference plate 6 can be fixedly disposed at a position slightly above a placement surface of the stacking platform 2 so as to block the workpiece placed on the stacking platform 2. The reference plate 6 may alternatively be arranged to be able to move along a third direction, so that the reference plate 6 can move to the position slightly above the placement surface of the stacking platform 2 based on needs. When the reference plate 6 needs to operate and play a blocking role, the reference plate 6 is located at a lower blocking position. When the reference plate 6 does not need to operate, the reference plate 6 can be further lifted to a third position. When the reference plate 6 is lifted to the third position, a channel for conveying the workpiece, the workpiece queue 11, or an empty tray 8 can be formed below the reference plate 6. In addition, optionally, the reference plate 6 can also move horizontally along the second direction, so that a starting position of the workpiece queue 11 can be adjusted based on specific situations such as the length of the workpiece queue 11 to be stacked. The movement along the second direction and movement along the third direction of the reference plate 6 can be implemented by an acting cylinder. A lower part of a frame 3 is provided a traveling part (not shown). The traveling part can be matched with a base side slide rail 12 and traveling track 13 on a base bracket side. The lower part of the frame 3 is further provided with a bracket 30. The bracket 30 is disposed close to a moving end of a drag chain (not shown) and configured to support a wire harness (not shown) and the like.

The shapers 4 include a first shaper 41, a second shaper 42, and a third shaper 43 that are disposed sequentially along the first direction. The first shaper 41 and the second shaper 42 are configured to approach or move away from each other along the first direction. The second shaper 42 and the third shaper 43 are configured to approach or move away from each other along the first direction. The first shaper 41 and the second shaper 42 approach or move away from each other along the first direction, so that workpieces located between the first shaper 41 and the second shaper 42 can be aligned and stacked. The second shaper 42 and the third shaper 43 approach or move away from each other along the first direction, so that workpieces located between the second shaper 42 and the third shaper 43 can be aligned and stacked. Thus, two sets of workpieces can be aligned and stacked simultaneously in an automated manner, effectively improving the stacking efficiency. In addition, the structure and the operation are simple, so that the production costs are reduced. In addition, the shapers (such as the foregoing first shaper 41, second shaper 42, and third shaper 43) each has a shaping surface 4a facing a shaper adjacent thereto, and the shaping surface 4a is used to come into contact with the workpiece.

In these embodiments of this disclosure, the stacking apparatus 140 further includes a pushing plate 52 and a reference plate 6. The pushing plate 52 is configured to push and press the workpiece. The pushing plate 52 is disposed on the base bracket and is configured to move forward or backward along the second direction intersecting the first direction. The pushing plate 52 moves forward to perform pushing and pressing operations. The reference plate 6 is disposed on the base bracket, is disposed on opposite sides of the pushing plate 5 in the second direction, and is configured to block the workpiece.

In these embodiments of this disclosure, the stacking apparatus 140 further includes a conveying system for the tray 8, where the conveying system is provided on the stacking platform 2. Specifically, the conveying system includes a conveying guide rail (not shown) disposed on the stacking platform 2 and extending along the second direction. The tray 8 can be driven by a fourth driving apparatus 9 as a power source to enter the stacking platform 2 via the channel along the conveying guide rail and is born by the stacking platform 2. The power of the fourth driving apparatus 9 can be transmitted to the tray 8 in the forms of gears and racks, sprockets and chains, speed chains, and the like.

Based on FIG. 13 and FIG. 14, the foregoing step S102 can be implemented through step S143 and step S144.

Step S143: The control device determines a target value of a shaping parameter for the third servo driving module based on the thickness information and width information of the product to be produced.

Step S144: The third servo driving module adjusts a position of a stacking plate of the stacking and shaping mechanism based on the target value of the shaping parameter.

In these embodiments of this disclosure, the stacking and shaping mechanism is provided with multiple stacking plates. The multiple stacking plates may include a first stacking plate, a second stacking plate, a third stacking plate, a fourth stacking plate, and a fifth stacking plate. The third servo driving module can adjust positions of the first stacking plate, the second stacking plate, the third stacking plate, and the fourth stacking plate in the same direction as the width direction of the product, and control the first stacking plate, the second stacking plate, the third stacking plate, and the fourth stacking plate to shaping two side planes of the product in the width direction. The third servo driving module can also adjust a position of the fifth stacking plate in the same direction as the thickness direction of the product, and control the fifth stacking plate to shape the plane of the product in the thickness direction.

In some embodiments, the foregoing method may further include: Product information in the production state of the gripper of the stacking robot is written into the identification code of the foregoing module tray.

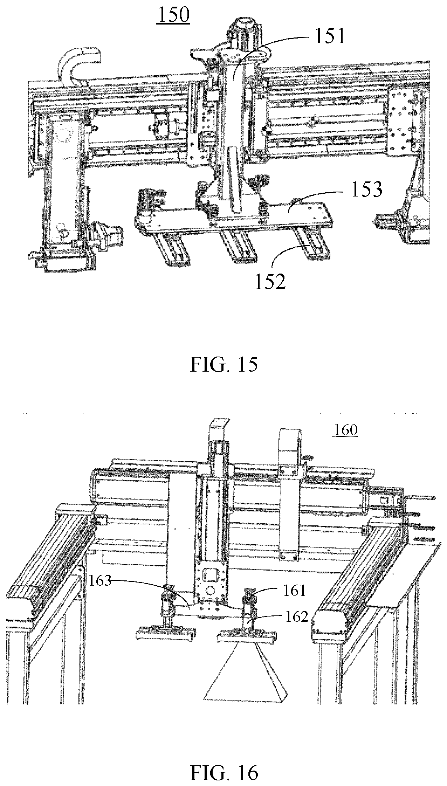

In some embodiments, a next procedure of the stacking procedure includes a pressing procedure. The production line further includes a pressing device corresponding to the pressing procedure. As shown in FIG. 15, the pressing device 150 includes a fourth servo driving module 151, a horizontal pressing plate 153, and a module pressing plate 152 disposed on the horizontal pressing plate 153 (three sets of horizontal pressing plates are shown in FIG. 15). The fourth servo driving module 151 is configured to adjust a position of the module pressing plate 152 based on a pressing position parameter value. The module pressing plate 152 is configured to press a product along a height direction of the product. Based on FIG. 15, step S102 can be implemented through step S145 and step S146.

Step S145: The control device determines the pressing position parameter value for the fourth servo driving module based on the height information of the product to be produced.

Step S146: The fourth servo driving module adjusts the position of the module pressing plate in the pressing device based on the pressing position parameter value.

In these embodiments of this disclosure, the module pressing plate after the position adjustment is configured to press the product along the height direction of the product. In a case that the product is a module, a plane where a pole is located can also be pressed.

In some embodiments, a method for obtaining the height information of the product to be produced may include: scanning the identification code of the module tray to obtain the product information of the product in the module tray; and in a case that the product information of the product in the module tray is different from product information in a production state of the pressing device, determining, based on the product information of the product in the module tray, the size information of the product to be produced. The size information includes height information.

In some embodiments, the production line further includes a module code scanning device corresponding to the pressing procedure. As shown in FIG. 16, the module code scanning device 160 includes a device support frame 163 as well as a sixteenth servo driving module 161 and a second code scanning detection module 162 that are disposed on the device support frame 163 (two sets of sixteenth servo driving modules and two sets of second code scanning detection modules 162 are shown in FIG. 16). The second code scanning detection module 162 is configured to scan a product based on a target value of module scanning times. The sixteenth servo driving module 161 is configured to drive the second code scanning detection module to move based on a target value of a movement parameter. Based on FIG. 16, the foregoing step S102 can be further implemented through steps S147 to S149.

Step S147: Determine, based on the size information of the product to be produced, the target value of the module scanning times for the second code scanning detection module and the target value of the movement parameter for the sixteenth servo driving module.

Step S148: The second code scanning detection module scans the product based on the target value of the module scanning times.

Step S149: The sixteenth servo driving module drives the second code scanning detection module to move based on the target value of the movement parameter.

In these embodiments of this disclosure, in a case that the product is a module, size information of the module corresponds to the number of cells included in the module, and the number of cells can determine the module scanning times of the second code scanning detection module. Since the size information of the module also includes thickness information of the cell, the thickness information of the cell can determine a movement distance of the second code scanning detection module for scanning a module once (that is, the foregoing movement parameter). For example, when the module is a double-row module, there are five cells in each row, and the second code scanning detection module can scan two cells at once. Therefore, based on the size information of the module, the target value of the module scanning times for the second code scanning detection module can be determined to be five, and the target value of the movement parameter is the thickness of the cell.

In some embodiments, a method for obtaining the size information of the product to be produced may include: scanning the identification code of the module tray to obtain the product information of the product in the module tray; and in a case that the product information of the product in the module tray is different from product information in a production state of the module code scanning device, determining, based on the product information of the product in the module tray, the size information of the product to be produced.

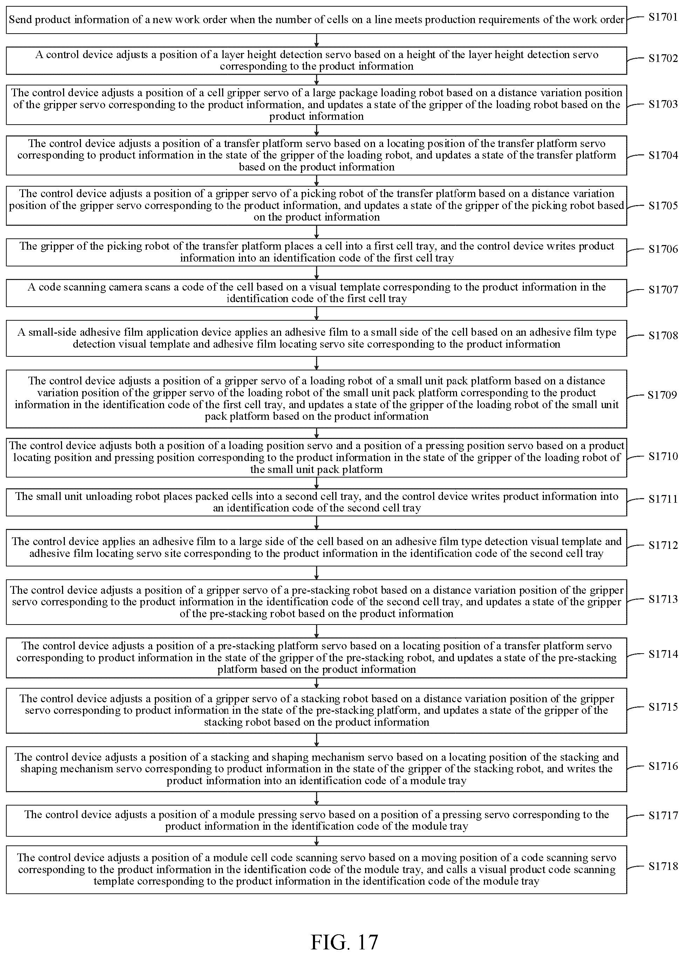

FIG. 17 is a fourth schematic flowchart of implementation of a product changeover method for production line according to an embodiment of this disclosure. As shown in FIG. 17, the method includes the following steps S1701 to S1718.

Step S1701: Send product information of a new work order when the number of cells on the line meets the production requirements of the work order.

In this embodiment of this disclosure, a module line calculates the total number of cells required for the production of the work order. When the number of cells on the line meets the production requirements of the work order, the work order is switched, and a manufacturing execution system (Manufacturing Execution System, MES) sends the product information of the new work order as a device switching data source.

In some embodiments, whether the number of cells on the line meets the production requirements of the work order can be determined through the following steps.

Step 1: A device upper-level computer at a cell code scanning station counts the number of qualified cells scanned to obtain a first number.

Step 2: The device upper-level computer counts the number of unqualified cells with adhesive films applied on sides through a programmable logic controller (Programmable Logic Controller, PLC) to obtain a second number.

Step 3: The device upper-level computer calculates the product of the number of unqualified modules and the number of cells in a single module to obtain a third number.

Step 4: The device upper-level computer calculates the product of the number of modules of various types of work orders in a current production template and the number of cells in various types of modules to obtain a fourth number.

Step 5: In a case that the first number is greater than or equal to the sum of the second number, the third number, and the fourth number, determine that the number of cells on the line meets the production requirements of the work order.

Step S1702: A control device adjusts a position of a layer height detection servo based on a height of the layer height detection servo corresponding to the product information.

In this embodiment of this disclosure, the control device can determine the height of the layer height detection servo in a preset product size parameter set based on the product information.

In this embodiment of this disclosure, the layer height detection servo after the position adjustment is used to detect a layer height of a cell.

Step S1703: The control device adjusts a position of a cell gripper servo of a large package loading robot based on a distance variation position of the gripper servo corresponding to the product information, and updates a state of the gripper of the loading robot based on the product information.

Step S1704: The control device adjusts a position of a transfer platform servo based on a locating position of the transfer platform servo corresponding to product information in the state of the gripper of the loading robot, and updates a state of the transfer platform based on the product information.

Step S1705: The control device adjusts a position of a gripper servo of a picking robot of the transfer platform based on a distance variation position of the gripper servo corresponding to the product information, and updates a state of the gripper of the picking robot based on the product information.

Step S1706: The gripper of the picking robot of the transfer platform places a cell into a first cell tray, and the control device writes product information into an identification code of the first cell tray.

Step S1707: A code scanning camera scans a code of the cell based on a visual template corresponding to the product information in the identification code of the first cell tray.

In this embodiment of this disclosure, the product information in the identification code of the first cell tray can be read first. In a case that a product visual template used currently by the code scanning camera does not correspond to the product information, the visual template corresponding to the product information in the identification code of the first cell tray is called; and a cell code in the cell is scanned based on the visual template, and content in the cell code is written into the identification code of the first cell tray.

Step S1708: A small-side adhesive film application device applies an adhesive film to a small side of the cell based on an adhesive film type detection visual template and adhesive film locating servo site corresponding to the product information.

In these embodiments of this disclosure, the small-side adhesive film application device can correct a position of the adhesive film based on the adhesive film locating servo site, and then apply the adhesive film to the small side of the cell based on the corrected adhesive film. The adhesive film type detection visual template is used to detect the position of the adhesive film on the cell.

Step S1709: The control device adjusts a position of a gripper servo of a loading robot of a small unit pack platform based on a distance variation position of the gripper servo of the loading robot of the small unit pack platform corresponding to the product information in the identification code of the first cell tray, and updates a state of the gripper of the loading robot of the small unit pack platform based on the product information.

Step S1710: The control device adjusts both a position of a loading position servo and a position of a pressing position servo based on a product locating position and pressing position corresponding to the product information in the state of the gripper of the loading robot of the small unit pack platform.

In this embodiment of this disclosure, the corresponding product locating position is automatically adjusted based on the product information in the state of the gripper of the loading robot of the small unit pack platform, and a device state of a loading position of the pack platform is updated. The small unit pack platform rotates by 90°, and the original device state of the loading position is transferred to a pressing and packing position. A pressing and packing servo adjusts the pressing position based on the device state. The pack platform rotates by 90°, and the original device state of the pressing and packing position is transferred to an unloading position A. A gripper of a small unit unloading robot A automatically adjusts a distance variation based on a device state of the unloading position A to complete an unloading and grasping action. The pack platform rotates by 90°, and the original device state of the unloading position A of the pack platform is transferred to an unloading position B. A gripper of a small unit unloading robot B automatically adjusts a distance variation based on a device state of the unloading position B to complete an unloading and grasping action.

Step S1711: The small unit unloading robot places packed cells into a second cell tray, and the control device writes product information into an identification code of the second cell tray.

Step S1712: The control device applies an adhesive film to a large side of the cell based on an adhesive film type detection visual template and adhesive film locating servo site corresponding to the product information in the identification code of the second cell tray.

In this embodiment of this disclosure, the product information in the identification code of the second cell tray can be read.

Step S1713: The control device adjusts a position of a gripper servo of a pre-stacking robot based on a distance variation position of the gripper servo corresponding to the product information in the identification code of the second cell tray, and updates a state of the gripper of the pre-stacking robot based on the product information.

Step S1714: The control device adjusts a position of a pre-stacking platform servo based on a locating position of a transfer platform servo corresponding to product information in the state of the gripper of the pre-stacking robot, and updates a state of the pre-stacking platform based on the product information.

Step S1715: The control device adjusts a position of a gripper servo of a stacking robot based on a distance variation position of the gripper servo corresponding to product information in the state of the pre-stacking platform, and updates a state of the gripper of the stacking robot based on the product information.

Step S1716: The control device adjusts a position of a stacking and shaping mechanism servo based on a locating position of the stacking and shaping mechanism servo corresponding to product information in the state of the gripper of the stacking robot, and writes the product information into an identification code of a module tray.

In this embodiment of this disclosure, the control device can determine, based on the product information, the locating position of the stacking and shaping mechanism servo in a preset product size parameter set.

Step S1717: The control device adjusts a position of a module pressing servo based on a position of a pressing servo corresponding to the product information in the identification code of the module tray.

In this embodiment of this disclosure, the module pressing servo after position adjustment can control a pressing plate of a module pressing station to press a pole plane of a module.

Step S1718: The control device adjusts a position of a module cell code scanning servo based on a moving position of a code scanning servo corresponding to the product information in the identification code of the module tray, and calls a visual product code scanning template corresponding to the product information in the identification code of the module tray.

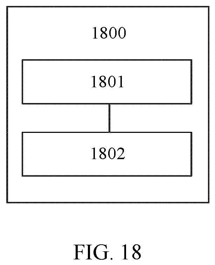

FIG. 18 is a schematic diagram of a constitution structure of a product changeover system for production line according to an embodiment of this disclosure. As shown in FIG. 18, the product changeover system 1800 for production line includes:
a control device 1801, configured to: determine, in response to a product changeover instruction, size information of a product to be produced; determine correspondingly, based on the size information of the product to be produced, a target value of a control parameter for at least one flexible module in a production device; and send the target value corresponding to the control parameter of the at least one flexible module to a controller of a corresponding flexible module; and
the production device 1802, configured to process an incoming material of the product to be produced.

In some embodiments, the flexible module of the production device 1802 includes at least one of the following: a driving module and a detection module. A control parameter of the detection module includes a position parameter of a target object detected by the detection module. The control device 1801 is configured to send the target value of the control parameter to a controller of the driving module, where after the driving module reaches a target site, an execution mechanism or detection module connected to the driving module is enabled to process the incoming material of the product; and/or the control device 1801 is configured to a target value of the position parameter of the target object to a controller of the detection module. The detection module is configured to detect the target object based on the target value of the position parameter.

In some embodiments, for at least a production device for the first production procedure, the control device 1801 is configured to: receive a product changeover instruction sent by a production execution system, where the product changeover instruction includes information of the product to be produced, and the product changeover instruction is sent in a case that the production execution system determines that the number of work orders of remaining products is zero; and determine the size information of the product based on the information of the product to be produced.

In some embodiments, for a production device for a non-first production procedure, the control device 1801 is configured to: acquire a production state of a flexible module in a production device corresponding to a previous procedure or a previous production action; and in a case that product information in the production state of the previous procedure or the previous production action is different from product information in a production state of a current production device, determine, based on the product information in the production state of the previous procedure or the previous production action, the size information of the product to be produced.

In some embodiments, the production line includes a loading device corresponding to a loading procedure. A driving module of the loading device includes a first servo driving module for driving a layer height detection sensor to move along a height direction. The control device 1801 is further configured to determine, based on the height information of the product to be produced, a layer height detection parameter value for the first servo driving module. The first servo driving module is configured to drive the layer height detection sensor to perform layer height detection on the incoming material of the product after the height information of the product descends to the target site.

In some embodiments, the driving module of the loading device further includes a second servo driving module on a gripper of a loading robot. The size information of the product to be produced further includes width information. The control device 1801 is further configured to determine, based on the width information of the product to be produced, a loading location parameter value for the second servo driving module. The second servo driving module is configured to drive two clamping plates on the gripper to move, so that a distance between the two clamping plates is adjusted to match the width information of the product.

In some embodiments, the production device further includes an adhesive film application device. A flexible module in the adhesive film application device includes a visual inspection module and a correction driving module. The control device 1801 is further configured to determine, based on the size information of the product to be produced, a target value of an adhesive film location parameter for the correction driving module and a target value of an adhesive film position parameter for the visual inspection module. The correction driving module is configured to perform, based on the target value of the adhesive film location parameter, position correction on an adhesive film to be applied. After the position correction of the adhesive film to be applied, the control device 1801 is further configured to: determine, based on product information of the product, adhesive film application position information of the product; and control an adhesive film application mechanism to apply the adhesive film to a side of the product. The visual inspection module is configured to inspect a position of the adhesive film on the product based on the target value of the adhesive film position parameter.

In some embodiments, a next procedure of the adhesive film application procedure includes a stacking procedure. The production line includes a stacking device corresponding to the stacking procedure. A flexible module in the stacking device includes a third servo driving module of a stacking and shaping mechanism. The size information of the product to be produced further includes thickness information. The control device 1801 is further configured to determine, based on the thickness information and width information of the product to be produced, a target value of a shaping parameter for the third servo driving module. The third servo driving module is configured to adjust a position of a stacking plate of the stacking and shaping mechanism based on the target value of the shaping parameter.

In some embodiments, a procedure of the product to be produced includes a pressing procedure, a stacking procedure as a previous procedure of the pressing procedure, a pre-stacking procedure as a previous procedure of the stacking procedure, an adhesive film application procedure as a previous procedure of the pre-stacking procedure, and a loading procedure as a previous procedure of the adhesive film application procedure. The production line includes a pre-stacking platform corresponding to the pre-stacking procedure, a pre-stacking robot corresponding to a previous production action of the pre-stacking platform, a stacking and shaping mechanism corresponding to the stacking procedure, and a stacking robot corresponding to a previous production action of the stacking and shaping mechanism.

In some embodiments, a flexible module in a pressing device includes a fourth servo driving module. The size information of the product to be produced includes height information of the product to be produced. The control device 1801 is further configured to determine, based on the height information of the product to be produced, a pressing position parameter value for the fourth servo driving module. The fourth servo driving module is configured to adjust a position of a module pressing plate in the pressing device based on the pressing position parameter value.

It should be understood that "an embodiment" or "one embodiment" mentioned throughout this specification means that specific features, structures, or characteristics related to the embodiment are included in at least one embodiment of this disclosure. Therefore, "in an embodiment" or "in one embodiment" appearing in various places throughout this specification does not necessarily refer to the same embodiment. Furthermore, these specific features, structures, or characteristics may be combined in any suitable manner in one or more embodiments. It should be understood that in the various embodiments of this disclosure, the sequence numbers of the above steps/processes do not imply the order of execution. The execution sequence of the steps/processes should be determined based on their functions and intrinsic logics, and should not constitute any limitation on the implementation process of the embodiments of this disclosure. The sequence numbers of the embodiments of this disclosure are merely for description and do not represent the merits of the embodiments.

It should be noted that in this specification, the terms "include", "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

The foregoing descriptions are merely specific embodiments of this disclosure but are not intended to limit the protection scope of this disclosure. Any variation or replacement readily figured out by persons skilled in the art within the technical scope disclosed in this disclosure shall fall within the protection scope of this disclosure.

### Industrial applicability

In the embodiments of this disclosure, the size information of the product to be produced can be determined based on the product changeover instruction; then, based on the size information of the product to be produced, the target value of the control parameter is correspondingly determined for the at least one flexible module in the production device; and ultimately, the target value corresponding to the control parameter of the at least one flexible module is sent to the controller of the corresponding flexible module so as to process the incoming material of the product to be produced. Thus, the target value of the control parameter can be rapidly determined for the at least one flexible module in the production device based on the size information of the produced product, so that the controller of the flexible module controls the flexible module based on the target value of the control parameter to process the incoming material of the product to be produced. Thus, the target value of the control parameter of the production device on the production line is determined based on the size information of the produced product, so that the changeover efficiency of the production line can be improved.

## Claims

1. A product changeover method for production line, wherein the production line comprises at least one production device corresponding to a procedure of a product to be produced; and the product changeover method for production line comprises:
determining, in response to a product changeover instruction, size information of the product to be produced;
determining correspondingly, based on the size information of the product to be produced, a target value of a control parameter for at least one flexible module in the production device; and
sending the target value corresponding to the control parameter of the at least one flexible module to a controller of a corresponding flexible module so as to process an incoming material of the product to be produced.

2. The product changeover method for production line according to claim 1, wherein the flexible module comprises at least one of the following: a driving module and a detection module, wherein a control parameter of the detection module comprises a position parameter of a target object detected by the detection module; and
the sending the target value corresponding to the control parameter of the at least one flexible module to a controller of a corresponding flexible module so as to process an incoming material of the product to be produced comprises at least one of the following:
sending, by a control device, the target value of the control parameter to a controller of the driving module, wherein after the driving module reaches a target site, an execution mechanism or detection module connected to the driving module is enabled to process the incoming material of the product; and
sending, by the control device, a target value of the position parameter of the target object to a controller of the detection module; and detecting, by the detection module, the target object based on the target value of the position parameter.

3. The product changeover method for production line according to claim 1, wherein for at least a production device for the first production procedure, the determining, in response to a product changeover instruction, size information of the product to be produced comprises:
receiving a product changeover instruction sent by a production execution system, wherein the product changeover instruction comprises information of the product to be produced, and the product changeover instruction is sent in a case that the production execution system determines that the number of work orders of remaining products is zero; and
determining the size information of the product based on the information of the product to be produced.

4. The product changeover method for production line according to claim 1, wherein for a production device for a non-first production procedure, the determining, in response to a product changeover instruction, size information of the product to be produced comprises:
acquiring a production state of a flexible module in a production device corresponding to a previous procedure or a previous production action; and
in a case that product information in the production state of the previous procedure or the previous production action is different from product information in a production state of a current production device, determining, based on the product information in the production state of the previous procedure or the previous production action, the size information of the product to be produced.

5. The product changeover method for production line according to claim 2, wherein the production line comprises a loading device corresponding to a loading procedure, and a driving module of the loading device comprises a first servo driving module for driving a layer height detection sensor to move along a height direction;
the size information of the product to be produced comprises height information of the product to be produced; and
the determining correspondingly, based on the size information of the product to be produced, a target value of a control parameter for at least one flexible module in the production device comprises:
determining, by the control device based on the height information of the product to be produced, a layer height detection parameter value for the first servo driving module; and
driving, by the first servo driving module, the layer height detection sensor to perform layer height detection on the incoming material of the product after the height information of the product descends to the target site.

6. The product changeover method for production line according to claim 5, wherein the driving module of the loading device further comprises a second servo driving module on a gripper of a loading robot; and the size information of the product to be produced further comprises width information; and
the determining correspondingly, based on the size information of the product to be produced, a target value of a control parameter for at least one flexible module in the production device further comprises:
determining, by the control device based on the width information of the product to be produced, a loading location parameter value for the second servo driving module; and
driving, by the second servo driving module, two clamping plates on the gripper to move, so that a distance between the two clamping plates is adjusted to match the width information of the product.

7. The product changeover method for production line according to claim 6, wherein the loading device comprises a loading transfer platform; and the product changeover method for production line further comprises:
updating, by the control device, a production state of the gripper of the loading robot to product information of the product; and
the determining, in response to a product changeover instruction, size information of the product to be produced comprises:
acquiring, by the control device, the production state of the gripper of the loading robot; and
in a case that product information in the production state of the gripper is different from product information in a production state of the loading transfer platform, determining, by the control device based on the product information in the production state of the gripper, the size information of the product to be produced.

8. The product changeover method for production line according to claim 6, wherein a next procedure of the loading procedure comprises an adhesive film application procedure; the production line comprises an adhesive film application device corresponding to the adhesive film application procedure; and a flexible module in the adhesive film application device comprises a visual inspection module and a correction driving module; and
the determining correspondingly, based on the size information of the product to be produced, a target value of a control parameter for at least one flexible module in the production device further comprises:
determining, by the control device, based on the size information of the product to be produced, a target value of an adhesive film location parameter for the correction driving module and a target value of an adhesive film position parameter for the visual inspection module;
performing, by the correction driving module based on the target value of the adhesive film location parameter, position correction on an adhesive film to be applied; and
after the position correction of the adhesive film to be applied, the product changeover method for production line further comprises:
determining, by the control device based on product information of the product, adhesive film application position information of the product, and controlling an adhesive film application mechanism to apply the adhesive film to be applied to a side of the product; and
inspecting, by the visual inspection module based on the target value of the adhesive film position parameter, a position of the adhesive film on the product.

9. The product changeover method for production line according to claim 8, wherein the incoming material of the product to be produced is a cell, and the loading device further comprises a first cell tray; and
the determining, in response to a product changeover instruction, size information of the product to be produced comprises:
scanning, by the control device, an identification code of the first cell tray to obtain product information of a product in the first cell tray; and
in a case that product information of the product in the first cell tray is different from product information in a production state of the adhesive film application device, determining, by the control device based on the product information of the product in the first cell tray, the size information of the product to be produced.

10. The product changeover method for production line according to claim 8, wherein a next procedure of the adhesive film application procedure comprises a stacking procedure; the production line comprises a stacking device corresponding to the stacking procedure; a flexible module in the stacking device comprises a third servo driving module of a stacking and shaping mechanism; and the size information of the product to be produced further comprises thickness information; and
the determining correspondingly, based on the size information of the product to be produced, a target value of a control parameter for at least one flexible module in the production device further comprises:
determining, by the control device based on the thickness information and width information of the product to be produced, a target value of a shaping parameter for the third servo driving module; and
adjusting, by the third servo driving module based on the target value of the shaping parameter, a position of a stacking plate of the stacking and shaping mechanism.

11. The product changeover method for production line according to claim 4, wherein the procedure of the product to be produced comprises a pressing procedure, a stacking procedure as a previous procedure of the pressing procedure, a pre-stacking procedure as a previous procedure of the stacking procedure, an adhesive film application procedure as a previous procedure of the pre-stacking procedure, and a loading procedure as a previous procedure of the adhesive film application procedure; and
the production line comprises a pre-stacking platform corresponding to the pre-stacking procedure, a pre-stacking robot corresponding to a previous production action of the pre-stacking platform, a stacking and shaping mechanism corresponding to the stacking procedure, and a stacking robot corresponding to a previous production action of the stacking and shaping mechanism.

12. The product changeover method for production line according to claim 11, wherein a flexible module in a pressing device corresponding to the pressing procedure comprises a fourth servo driving module; and the size information of the product to be produced comprises height information of the product to be produced; and
the determining correspondingly, based on the size information of the product to be produced, a target value of a control parameter for at least one flexible module in the production device comprises:
determining, by a control device based on the height information of the product to be produced, a pressing position parameter value for the fourth servo driving module; and
adjusting, by the fourth servo driving module based on the pressing position parameter value, a position of a module pressing plate in the pressing device.

13. A product changeover system for production line, wherein the product changeover system for production line comprises:
a control device, configured to: determine, in response to a product changeover instruction, size information of a product to be produced; determine correspondingly, based on the size information of the product to be produced, a target value of a control parameter for at least one flexible module in a production device; and send the target value corresponding to the control parameter of the at least one flexible module to a controller of a corresponding flexible module; and
the production device, configured to process an incoming material of the product to be produced.

14. The product changeover system for production line according to claim 13, wherein the production device comprises a loading device; a driving module of the loading device comprises a first servo driving module for driving a layer height detection sensor to move along a height direction; and the size information of the product to be produced comprises height information of the product to be produced;
the control device is further configured to determine, based on the height information of the product to be produced, a layer height detection parameter value for the first servo driving module; and
the first servo driving module is configured to drive the layer height detection sensor to perform layer height detection on the incoming material of the product after the height information of the product descends to a target site.

15. The product changeover system for production line according to claim 14, wherein the driving module of the loading device further comprises a second servo driving module on a gripper of a loading robot; and the size information of the product to be produced further comprises width information; and
the control device is further configured to determine, based on the width information of the product to be produced, a loading location parameter value for the second servo driving module; and
the second servo driving module is configured to drive two clamping plates on the gripper to move, so that a distance between the two clamping plates is adjusted to match the width information of the product.

16. The product changeover system for production line according to claim 15, wherein the loading device comprises a loading transfer platform;
the control device is further configured to update a production state of the gripper of the loading robot to product information of the product;
the control device is further configured to acquire the production state of the gripper of the loading robot; and
in a case that product information in the production state of the gripper is different from product information in a production state of the loading transfer platform, the control device is further configured to determine, based on the product information in the production state of the gripper, the size information of the product to be produced.

17. The product changeover system for production line according to claim 15, wherein the production device further comprises an adhesive film application device; and a flexible module in the adhesive film application device comprises a visual inspection module and a correction driving module;
the control device is further configured to determine, based on the size information of the product to be produced, a target value of an adhesive film location parameter for the correction driving module and a target value of an adhesive film position parameter for the visual inspection module;
the correction driving module is configured to perform, based on the target value of the adhesive film location parameter, position correction on an adhesive film to be applied;
after the position correction of the adhesive film to be applied, the control device is further configured to: determine, based on product information of the product, adhesive film application position information of the product; and control an adhesive film application mechanism to apply the adhesive film to a side of the product; and
the visual inspection module is configured to inspect, based on the target value of the adhesive film position parameter, a position of the adhesive film on the product.

18. The product changeover system for production line according to claim 17, wherein the incoming material of the product to be produced is a cell, and the loading device further comprises a first cell tray; and
the control device is further configured to scan an identification code of the first cell tray to obtain product information of a product in the first cell tray; and
in a case that product information of the product in the first cell tray is different from product information in a production state of the adhesive film application device, the control device is further configured to determine, based on the product information of the product in the first cell tray, the size information of the product to be produced.

19. The product changeover system for production line according to claim 17, wherein a next procedure of the adhesive film application procedure comprises a stacking procedure; the production line comprises a stacking device corresponding to the stacking procedure; a flexible module in the stacking device comprises a third servo driving module of a stacking and shaping mechanism; and the size information of the product to be produced further comprises thickness information;
the control device is further configured to determine, based on the thickness information and width information of the product to be produced, a target value of a shaping parameter for the third servo driving module; and
the third servo driving module is configured to adjust, based on the target value of the shaping parameter, a position of a stacking plate of the stacking and shaping mechanism.

20. The product changeover system for production line according to claim 13, wherein a procedure of the product to be produced comprises a pressing procedure; a flexible module in a pressing device corresponding to the pressing procedure comprises a fourth servo driving module; and the size information of the product to be produced comprises height information of the product to be produced;
the control device is further configured to determine, based on the height information of the product to be produced, a pressing position parameter value for the fourth servo driving module; and
the fourth servo driving module is configured to adjust, based on the pressing position parameter value, a position of a module pressing plate in the pressing device.
